# EUROPEAN PATENT APPLICATION

(11) **EP 1 939 581 A1**
(43) Date of publication of application: **02.07.2008**
(21) Application number: 07405346.3
(22) Date of filing: 06.12.2007
(51) Int. Cl.: G01B 9/02, G01B 11/24, G01N 21/47

(54) **Apparatus for the contact-less, interferometric determination of surface height profiles and depth scattering profiles**

(30) Priority: 27.12.2006 US 877169 P
(71) Applicant: Heliotis AG, 8048 Zürich (CH)
(72) Inventor: Seitz, Peter, 8902 Urdorf (CH); Urban, Claus, 8600 Dübendorf (CH)
(74) Representative: Schneider Feldmann AG Patent- und Markenanwälte

(57) **Abstract**

An apparatus for the contact-less, interferometric investigation of a sample object (2), particularly for the determination of sample surface profiles and depth profiles of light scattering properties of the sample (2), comprises a light source (1), able to provide broadband, low-coherence light; a beam splitter (4), arranged to split up a source light beam (11) produced by the light source (1) into a reference light beam (31) and an object light beam (21), and arranged to recombine a reflected reference light beam (31') and a reflected object light beam (21') to a detection light beam (51); a reference mirror element (3), arranged to reflect said reference light beam (31) back to the beam splitter (4); and a one- or two-dimensional photo sensor (5), able to convert incident light of said detection light beam (51) to an electric current signal. The reference mirror element (3) is arranged to laterally and/or angularly displace the reflected reference light beam (31') in relation to the optical axis (33) of the incident reference light beam (31). Interference between the reference light beam (31') and the object light beam (21') leads to fringe packets on the photo sensor, with a lateral shift that is a direct measure of the distance of a reflecting surface or scattering layer on the sample object to the beam splitter (4).

## Description

### Technical Field

The present invention relates to an apparatus for the contact-less, interferometric investigation of samples, particularly for the determination of surface height profiles and depth scattering profiles of a sample, according to the preamble of the independent claims.

### State of the Art

A conventional method for the measurement of a surface height profile of a sample with a precision in the order of one micrometer comprises the use of a moveable mechanical stylus for mechanically scanning the surface point by point, as for example described in US 6,763,319. This method, called mechanical profiling or mechanical coordinate measurement, is restricted by the speed with which the stylus can be displaced while controllably touching the surface.

Also known is the use of optical methods, in particular interferometric methods, for determining surface and depth profiles. An interferometric laser profilometer is for example shown in EP 498541, where the distance to one point on the sample surface is determined with a Twyman-Green interferometer, consisting of a beam splitter, one or several monochromatic light sources, a moveable plane reference mirror, and a photodetector for each of the monochromatic light sources.

With a single monochromatic light source with wavelength λ, the non-ambiguous distance range is limited to λ/2. More than one light source can be employed to extend the distance range, using so called "synthetic wavelength" measurement techniques. It is also known that such a Twyman-Green interferometer can employ a two-dimensional image sensor, in order to measure distances to a plurality of sample surface points simultaneously. This approach, however, requires the various used light sources to be precisely locked to each other, which is a rather complex task.

This requirement can be overcome by replacing the plurality of monochromatic light sources by one single light source with a broad spectrum, implying that this source has low temporal coherence. The resulting "white-light" interferometry technique is known as optical coherence tomography (OCT), described for example in US 5,459,570. Because of the intricacy of the required data processing, this system is restricted to the measurement of one distance point at one time.

This limitation was overcome by the parallel OCT technique, as described for example in EP 1458087 A1, which extends the point-wise OCT profiling technique to a plurality of simultaneously measured sample points. However, the optical setup still corresponds to a Twyman-Green interferometer and involves a mechanically moving reference mirror. For this reason, the measurement speed for the acquisition of a complete data set is limited to the speed with which a plane mirror can be mechanically moved with the required accuracy. In practice this speed is limited to a few 10 Hz. Furthermore such techniques are critical in vibration-sensitive environments, where generally no fast moving parts can be tolerated.

The limitation of a moving plane reference mirror can be overcome for some special cases, in which the distance excursion of the sample surface does not exceed a few 10 micrometers. US 6,268,921 describes an interferometric device for recording the depth optical reflection and transmission characteristics of a sample object, in which a fixed staircase mirror is applied, i.e. an arrangement of small plane and coplanar reference mirrors, instead of one single plane reference mirror. The relative longitudinal distance from one mirror step to the next needs to be smaller than half the central wavelength of the employed low-coherence light source. To limit the effects of diffraction, the lateral size of the mirrors must be limited to about 10 micrometers. Because of the wide spectral width of the employed light, it is not possible to use a finer period of the stepped mirror. It is thus not practical to employ a reflective optical grating in Littrow mount, where the incident and the reflected light are found in the same direction, in the 1^{st} and -1^{st} diffraction order.

### Summary of the Invention

An object of the present invention is to provide an apparatus for the contact-less, interferometric investigation of samples, particularly for the determination of surface height profiles and depth scattering profiles of a sample, without the drawbacks of the state of the art, particularly without employing moving parts. A further object of the invention is to provide a method for determining a surface height profile or depth scattering profile of a sample (2), that can preferably be implemented directly on a photo sensor, offering the possibility of realizing cost-effective, low-complexity parallel OCT systems, consisting of a small number of opto-mechanical and optoelectronic parts.

These and other problems are solved by the apparatus according to the present invention, and the method according to the present invention, as defined in the independent claims. Further advantageous embodiments are given in the dependent claims.

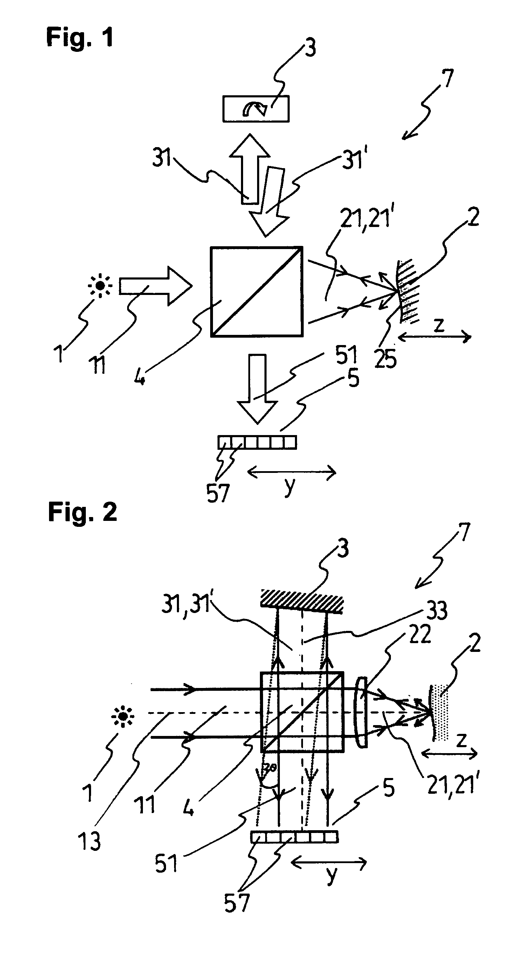

Figure 1 schematically shows the basic principle of an apparatus 7 according to the invention, which consists of a basic interferometric optical setup of the Michelson type, comprising five components:
(i) A light source 1 with large spectral width and correspondingly low temporal coherence length of typically 1 to 100 micrometers;
(ii) a beam splitter 4, splitting up the sample light beam 11 into a reference light beam 31 and a sample light beam 21, and recombining the returning light beams 31', 21' to a detection light beam 51;
(iii) a sample arm with sample 2, whose surface 25 is illuminated with the sample light beam 21 of low-coherence light;
(iv) a reference arm with a reference mirror element 3, capable of reflecting the incident reference light beam 31 to the beam splitter 4 with a certain lateral and/or angular displacement; and
(v) a one- or two-dimensional photo sensor 5 with a plurality of pixel elements 57, for acquiring the optical interference signal resulting from the incident detection light beam 51, converting it into an electrical signal, and making said signal available for subsequent signal processing.

The beam splitter 4 recombines the sample light beam 21', reflected from a focused line or point 25 on the surface of the sample object 2, with a reference light beam 31', reflected back by the reference mirror element 3 to the beam splitter 4, with a certain angular and/or lateral displacement in relation to the incident reference light beam 31, to a detection light beam 51. As a result of the difference of the path lengths of the light reflected from the sample surface 25 and the light reflected from the reference mirror element 3, interference patterns 8 appear on the plane of the photo sensor 5. Because of the low temporal coherence of the employed light source 1, the interference patterns 8 consist of fringe packets, whose envelopes carry the information about the relative distance of the sample surface 25 to the beam splitter 4: The larger the distance of the reflecting surface 25 from the beam splitter 4, the more the fringe packet is laterally shifted on the sensor 5. The lateral position of the maximum of the interference fringe packet's envelope is a direct measure of the actual height of the sample surface.

### Ways to implement the Invention

Figure 2 schematically shows the basic setup of a first embodiment of an apparatus 7 according to the invention, employing a collimated, parallel source light beam 21, with a plane wave front. Such a setup is thus equivalent to a point source placed at infinite distance to the beam splitter 4.

The light source 1 may for example be a super-luminescence diode (SLD), or an ultra fast pulse laser, and has a typical temporal coherence length of 1 to 100 micrometer. The central wavelength of the light source is typically in the visible or near infrared spectrum. The light source 1 should also be spatially coherent, which means that each individual part of a wave front emitted from the light source 1 can possibly interfere with each other part of the same wave front. The examples of light sources mentioned above typically emit spatially coherent light. Additionally, the radiation emitted by the light source 1 may be transported to the interference setup with an optical fiber. To ensure that the light transmitted through the optical fiber is in a spatial single mode, a single mode optical fiber should be used.

A suitable optical element in the sample arm, such as a refractive or diffractive object imaging lens 22, focuses the incident plane wave object light beam 21 to a point or a line (perpendicular to the plane of drawing) on a focus plane 25 on the surface of the sample object 2. The same object imaging lens 22 then recollects the sample light beam 21' reflected and scattered back from the sample surface 25. The reference mirror element 3 is a plane reference mirror 3, tilted to the optical axis 33 of the incident reference light beam 31 by a certain, small angle θ. Consequently, the reference light beam 31' reflected to the beam splitter 4 is angularly displaced to the optical axis by twice said tilt angle, 2θ. The beam splitter 4 recombines the reference beam 31' with the collimated sample light beam 21' reflected from the object focus plane 25 to a detection light beam 51. As a result of the interference between reference light beam 31' and object light beam 21', an interference pattern is produced on the plane of photo sensor 5. Due to the low temporal coherence of the employed light source 1 it consists of fringe packets, carrying the information about the relative distance of the sample surface 25 to the beam splitter 4.

Referring to the situation depicted in Figure 2, the optical path length of the reference light beam 31, 31' increases from right to left on the photo sensor 5, and thus the region of coherent interference shifts from right to left with increasing optical path length of the object light beam 21, 21'. Thus the larger the distance between the focused point on the sample surface 2 and the beam splitter 4, and thus the length of the optical path of the corresponding reflected sample light beam 21, 21', the more the resulting fringe packet corresponding to that sample point is shifted left on the photo sensor plane 5. The lateral displacement position of the maximum of the interference fringe packet's envelope is therefore a direct measure of the actual height of the sample surface, as illustrated in Figures 5 and 6.

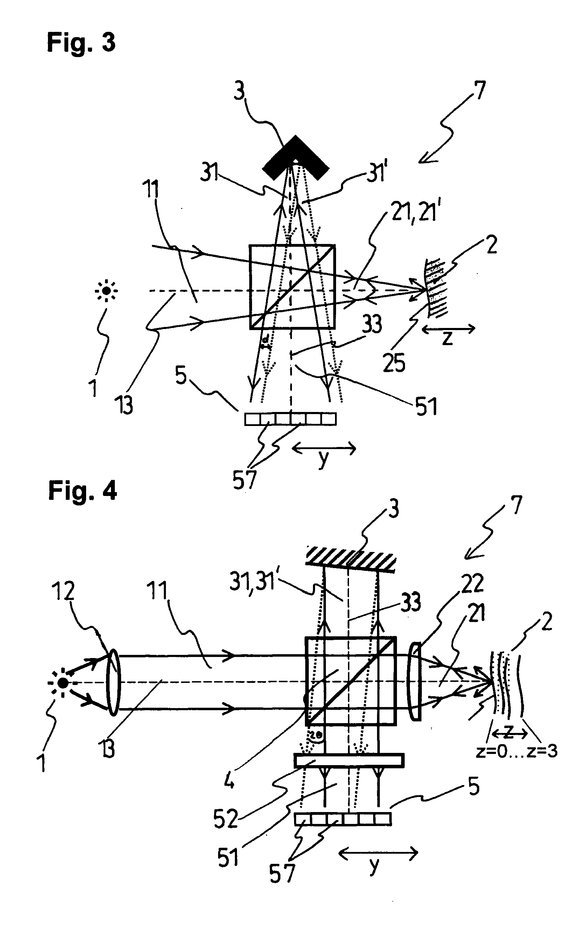

A second possible embodiment of the present invention is schematically shown in Figure 3. It applies a low-coherence light source at a finite distance, i.e. with spherical or cylindrical waveform. The source light beam is focused on a point or a line (perpendicular to the plane of the drawing) on an object focus plane 25 on the sample 2 under study, from where it is reflected back to the beam splitter 4. The focusing can be achieved by suitable means (not shown) such as spherical or cylindrical lenses, arranged in the source light beam 11.

The reference path contains a reference mirror element 5 that is capable of laterally displacing the reflected reference light beam 31' from the incident reference light beam 31 by a distance d of a few micrometers up to a few millimeters. An example of a suitable reference mirror element 5 for that purpose is a corner cube mirror, as it is shown in Figure 3.

Again an interference pattern between the object light beam 21' and the reference light beam 31' is produced on the sensor plane 5. Starting from an intersection point of the optical axis of beam 31' with photo sensor 5, the optical path length of the reference light beam 31' with spherical or cylindrical wave front increases towards the left side of the sensor 5. Thus the region of coherent interference, meaning the position of the fringe packet, is also shifted to the left with increasing path length of the object light beam 21'. As in the embodiment shown in Figure 2, the lateral displacement position of the maximum envelope of the interference fringe packet is a direct measure of the actual distance of the sample surface.

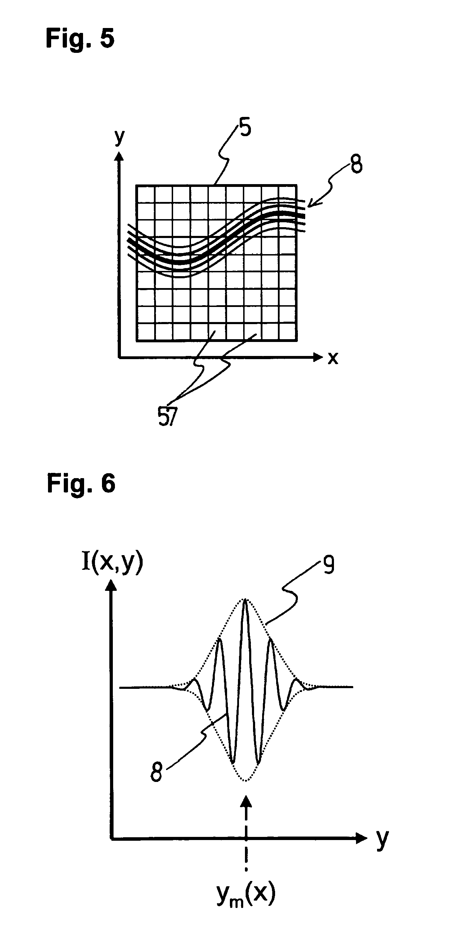

In the above mentioned embodiments of an apparatus 7 according to the invention a fringe pattern 8 is produced in the plane of the one-dimensional photo sensor 5 along an axis y, with an envelope whose maximum position is a direct measure of the relative local height of the sample surface. By focusing the object light beam 21 on a line (perpendicular to the plane of the drawing) on the object surface instead of a single point, and by applying a two-dimensional photo-sensor 5 with a second axis x (perpendicular to the plane of the drawing), a two-dimensional interference fringe pattern 8, representing a height profile along the illuminated line on the sample surface, can be measured. Figure 5 shows a typical interference fringe pattern 8 on the sensor plane, generated by an apparatus according to this invention. The x coordinate corresponds to the lateral position along an illuminated line on the surface of the sample 2, and the y coordinate corresponds to the relative local height of the sample surface, in units that depend on the central wavelength of the light source spectrum. and the geometric details of the optical setup.

Figure 6 illustrates the intensity distribution I(x,y) of the interference fringe pattern 8 as a function of the optical path difference coordinate y, for a specific lateral position x on the illuminated line on the sample surface. The position yₘ(x) of the maximum of the envelope 9 of the interference fringe pattern 8 can be used as a direct measure of the relative local distance of the beam splitter 4 to the sample surface 25, and thus of the local height at the lateral position x.

To each point on the illuminated line on the sample surface 2 corresponds a fringe pattern I(x,y) as shown in Figure 6. For each column x of the photosensor, a one-dimensional array y of fringe pattern intensity values 8 is read out, an envelope function 9 is calculated, and the position yₘ(x) of the envelope maximum is determined. This position is then used as a direct measure of the relative local distance to the sample surface at lateral position x.

A preferred way of carrying out this signal processing is the following:
(i) A sliding average over a large number of intensity values in the one-dimensional array y is determined for each column position x. For a correct average, the amount of data points to be considered in the average must cover at least one period of the fringe signal, and preferentially several fringe periods.
(ii) At each column position x, the sliding average value is subtracted from the local intensity value array y, leading to an offset-free fringe signal.
(iii) The offset-free fringe signal is rectified, i.e. negative values are converted into positive signals.
(iv) The resulting rectified fringe signal is low-pass filtered, i.e. averaged over a spatial domain along axis y which corresponds to one or more periods of the fringe signal. The resulting low-pass filtered signal represents the envelope signal 9.
(v) The position of the maximum envelope signal amplitude is determined, whereby preferably envelope values to the left and the right of the maximum signal are used to interpolate the position of the maximum to a precision that corresponds to a fraction of the sampling distance.
These calculations can either be carried out in the analog domain, or in the digital domain with analog-to-digital converted intensity values I_{D}(x,y), or using any mixture of analog and digital operations.

If the sample object is not completely opaque to the incident light, said light can penetrate into the sample volume, and will be scattered and reflected by regions with variations of the optical properties, for example from discontinuities in the refractive index. In such a case, the interference fringe pattern in the sensor plane will not only show one fringe packet with one envelope maximum, but it will rather comprise several, potentially overlapping fringe packets, whose envelope functions have a relative amplitude that is a measure of the local optical scattering function along a depth axis z of the sample. For each array y of the photo sensor, a depth scattering profile can be determined following the same procedure as described above. This process then results in a two-dimensional image of backscattering coefficients, which corresponds to the same information that can be acquired with known optical coherence tomography (OCT) techniques. An apparatus according to the invention thus may also be used as a optical coherence tomography system.

Figure 4 shows an embodiment of an apparatus according to the invention, which is arranged to measure the depth scattering characteristics of a sample object 2 along a depth axis z. The measured depth reflection data can be two-dimensional, i.e. the scattering profile along a depth axis z of an illuminated line across the object surface is recorded. The measured depth reflection data can also be one-dimensional, i.e. the depth profile along the z-direction of a specific point on the surface of the sample object 2 is recorded. The further description refers to this one-dimensional case, as it is implemented in the embodiment of Figure 4.

The shown sample object 2 consists of n=4 distinct layers, which represent an internal structure of the sample object, for example changes in the refractive index. These internal structures scatter and/or reflect light impinging on the sample surface 2 and entering the sample volume. An apparatus according to the invention can measure many layers simultaneously. A sample object may also contain any other micro- or macrostructure that reflect and/or scatter light. Thus the reflection/scattering characteristics of the object along depth axis z represent the object's internal structure. Thus, if said object is partially transparent for the source light spectrum used for the measurement, a depth profile of the structures along a perpendicular z-axis can be obtained.

The source arm of the apparatus in Figure 4 comprises a light source 1, and a spherical lens 12, e.g. a positive achromatic lens, which is placed concentrically on the optical axis 13 of the source light beam 11 in such a distance from the light source 1, respectively an optical fiber, that the light emitted from the source 1 is collimated along the optical axis 13. The interferometric system comprises a beam splitter 4, dividing the intensity of the source light beam 11 into the reference light beam 31, and the sample light beam 21. The reference path comprises a plane mirror 3, with a perpendicular that is tilted at an angle θ with respect to the optical axis 33 of the incident reference light beam. The plane reference mirror 3 therefore reflects the collimated light beam from the beam splitter under an angle 2θ with respect to the optical axis 33. The sample arm comprises the object 2 under investigation. A spherical lens 22, e.g. a positive achromatic lens, focuses the collimated sample light beam 21 coming from the beam splitter 4 onto a focus plane on the object. The focal length of lens 22 is chosen such that the depth of field of the focal spot is of the same size or larger than the total depth of the object under investigation, i.e. the distance between the planes z=0 and z=3 of the object 2. As described before, the planes z=0 to z=3 of the object 2 reflect and/or scatter the light, which travels back trough the same spherical lens 22 to the beam splitter 4. The beam splitter 4 subsequently recombines the sample light beam 21' and the reference light beam 31', to a detection light beam 51 in direction of photo sensor 5.

The point-measurement setup of Figure 4 applies a one-dimensional detector array 5 as a photo detector. A cylindrical lens 52 oriented along the detector array 5 focuses the impinging detection light beam 51 onto the pixels 57 of photodetector 5, in order to increase the sensitivity on the sensor 5.

The optical path length for the reference light beam 21 is a function of the lateral position on the sensor array 5. In the example of Figure 4 the path length of the impinging reference light beam on photodetector 5 increases from right to left. The optical path length in the sample light beam 21 is determined by the position z=k of the reflecting layer k in the object 2 (k=0,..3,). The two light beams 31, 21 from the reference arm and the sample object arm interfere with each another. Due to the low temporal coherence length of the light, interference occurs only for optical path length differences smaller than or equal to the temporal coherence length of the light. Subsequently, interference occurs only at those lateral positions on the photodetector 5, for which the optical path lengths of the reference path and the sample path are similar. The lateral position where interference occurs on the photodetector 5 is, therefore, a direct measure of the position of a reflecting plane z=k in the object.

### List of Reference Symbols

- 1: light source
- 11: source light beam
- 12: collimating lens
- 13: optical axis
- 2: sample surface
- 21: object light beam
- 22: object imaging lens
- 25: object focus plane
- 3: reference mirror element
- 31: reference light beam
- 33: optical axis
- 4: beam splitter
- 5: photo sensor
- 52: cylindrical lens
- 51: detection light beam
- 57: pixel elements
- 7: profilometer apparatus
- 8: fringe pattern
- 9: envelope function

## Claims

1. An apparatus for the contact-less, interferometric investigation of a sample object (2), comprising:
a light source (1), able to provide broadband, low-coherence light;
a beam splitter (4), arranged to split up a source light beam (11) produced by the light source (1) into a reference light beam (31) and an object light beam (21), and
arranged to recombine a reflected reference light beam (31') and a reflected object light beam (21') to a detection light beam (51);
a reference mirror element (3), arranged to reflect said reference light beam (31) back to the beam splitter (4);
a one- or two-dimensional photo sensor (5) with a plurality of pixel elements (57), able to convert incident light of said detection light beam (51) to an electric current signal;
**characterized in that**
the reference mirror element (3) is arranged to laterally and/or angularly displace the reflected reference light beam (31') in relation to the optical axis (33) of the incident reference light beam (31).

2. The apparatus according to claim 1, wherein the reference mirror element (3) is a plane mirror with a perpendicular that is tilted to the optical axis (33) of the incident reference light beam (31).

3. The apparatus according to claim 1, wherein the reference mirror element (3) is a corner cube mirror.

4. The apparatus according to any of the preceding claims, **characterized by** a collimating lens (12), arranged to collimate the light of the light source (1) to a parallel source light beam (11).

5. The apparatus according to any of the preceding claims, **characterized by** an object imaging lens (22), arranged to focus said object light beam (21) to an object focus plane (25) on the sample object (2), and to collimate light reflected from said object focus plane (25) back to the object light beam (21').

6. The apparatus according to any of claims 1 to 4, **characterized by** focusing means, arranged between the light source (1) and the beam splitter (4) to focus the source light beam (11) to an object focus plane (25).

7. The apparatus according to any of the preceding claims, wherein the light source (1) is a super-luminescence diode or an ultra fast pulse laser.

8. The apparatus according to any of the preceding claims, comprising a single-mode optical fiber between the light source (1) and the beam splitter (4).

9. The apparatus according to any of the preceding claims, comprising signal processing means.

10. A method for determining a surface height profile or depth scattering profile of a sample (2), comprising the steps of:
providing a photo-sensor (5) array with a plurality of pixel elements (57) along an axis y, able to convert incident light (51) to an electric current signal;
detecting with said photo sensor (5) a coherent interference pattern signal (8) of an object light beam (21'), reflected from a focused point on the sample (2), and a reference light beam (31'), whereby said reference light beam (31') is arranged to have a spatial phase shift in relation to the object light beam (21'), such that with increasing length of the optical path of the object light beam (21') reflected from the focused point on the sample (2) the region of coherent interference (8) is shifted along the axis y of photo sensor (5);
determining the central position yₘ of the coherent interference pattern (8) signal; and
calculating from said central position yₘ the position z of the focused point on the sample (2).

11. The method according to claim 10, wherein a maximum of a calculated envelope (9) signal of the interference pattern (8) signal is used to determine the central position yₘ of the coherent interference pattern (8) signal.

12. The method according to claim 11, wherein the envelope (9) signal is calculated by:
removing a baseline signal from the coherent interference pattern (8) signal;
rectifying the resulting baseline-free signal; and
averaging the resulting rectified signal over one or more periods of the interference pattern, resulting in the envelope (9) signal.
